# EUROPÄISCHE PATENTSCHRIFT

(11) **EP 3 948 232 B1**
(45) Veröffentlichungstag und Bekanntmachung des Hinweises auf die Patenterteilung: **09.07.2025**
(21) Anmeldenummer: 20713208.5
(22) Anmeldetag: 12.03.2020
(51) Int. Cl.: G01N 21/41, G01N 21/43

(54) **REFRAKTOMETER UND VERFAHREN ZUR BESTIMMUNG DES BRECHUNGSINDEX EINES PROZESSMEDIUMS MIT EINEM REFRAKTOMETER**
REFRACTOMETER AND METHOD FOR DETERMINING THE REFRACTIVE INDEX OF A PROCESS MEDIUM USING A REFRACTOMETER
RÉFRACTOMÈTRE ET PROCÉDÉ DE DÉTERMINATION DE L'INDICE DE RÉFRACTION D'UN FLUIDE DE PROCÉDÉ AU MOYEN D'UN RÉFRACTOMÈTRE

(30) Priorität: 02.04.2019 DE 102019108559
(43) Veröffentlichungstag der Anmeldung: 09.02.2022
(73) Patentinhaber: Endress+Hauser Digital Solutions (Deutschland)GmbH, 79110 Freiburg (DE)
(72) Erfinder: MEINERT, Tobias, 79111 Freiburg (DE); SCHERER, Benjamin, 79254 Oberried (DE); MANNHARDT, Joachim, 73431 Aalen (DE)
(74) Vertreter: Endress + Hauser Group Services (Deutschland) AG+Co. KG
(86) Internationale Anmeldenummer: PCT/EP2020/056712
(87) Internationale Veröffentlichungsnummer: WO 2020/200690

(56) Entgegenhaltungen:
- JP-A- H01 170 838
- JP-A- H01 197 633
- US-A- 4 699 511
- US-A- 5 347 358

## Beschreibung

Die Erfindung betriff ein Refraktometer zur Bestimmung des Brechungsindex eines Prozessmediums mit zumindest einer Lichtquelle, einer optischen Detektoreinheit, einer Regel-/Auswerteinheit und einem Messprisma mit einem vorgegebenen Brechungsindex. Ferner betrifft die Erfindung ein Verfahren zur Bestimmung des Brechungsindex eines Prozessmediums mit einem erfindungsgemäßen Refraktometer.

Refraktometer werden in vielen Bereichen der Prozessmesstechnik, beispielsweise in der Lebensmitteltechnologie, Wasserwirtschaft, Chemie, Biochemie, Pharmazie, Biotechnologie und Umweltmesstechnik zur Bestimmung des Brechungsindex eines Prozessmediums, bspw. einer Prozessflüssigkeit, eingesetzt. Der Brechungsindex wird zum Beispiel zur Bestimmung einer aus dem Brechungsindex ableitbaren Prozessgröße, wie etwa der Konzentration eines Stoffes in dem Prozessmedium, bspw. Zucker, oder bei einer Reinheitsprüfung herangezogen.

Das Messprinzip eines Refraktometers beruht darauf, dass an einer durch eine medienberührende Oberfläche des Messprismas gebildete Grenzfläche zwischen Prozessmedium und Messprisma Licht eingestrahlt wird. Dabei wird mittels Brechung und/oder Reflexion des Lichts an der Grenzfläche ein optisches Signal erzeugt. Die Richtung und/oder Intensität der gebrochenen und/oder reflektieren Lichts an der medienberührende Oberfläche ist abhängig von der Brechungsindexdifferenz zwischen dem Prozessmedium und Messprisma. Anhand des optischen Signal und dem bekannten Brechungsindex des Messprismas kann somit der Brechungsindex des Prozessmediums bestimmt werden.

Aus dem Stand der Technik sind beispielsweise sogenannte Abbé-Refraktometer bekannt, die mit dem Grenzwinkel der Totalreflexion arbeiten. In Abhängigkeit von der Brechungsindexdifferenz zwischen dem Messprisma und dem Prozessmedium sowie dem Einfallswinkel wird das an eine Grenzfläche zwischen Prozessmedium und Messprisma eingestrahlte Licht teilweise in das Prozessmedium gebrochen und reflektiert oder vollständig reflektiert. Der kritische Winkel der Totalreflexion wird mittels der reflektierten Lichtintensität in Abhängigkeit von dem Einfallswinkel bestimmt und daraus der Brechungsindex des Prozessmediums ermittelt. Abbé-Refraktometer sind im Stand der Technik in unterschiedlichsten Ausgestaltungen beschrieben, beispielweise in der DE 1994 47 98 A1 oder in der JP-H-1-197633.

Im Gegensatz zu Abbé-Refraktometern werden bei Durchlichtrefraktometern (auch: Transmissionsrefraktometer) Messprisma und Prozessmedium von einem vorzugsweise kolliminierten Strahlenbündel durchquert. Die Ablenkung des Strahlenbündels beim Durchqueren des Messprismas und des Prozessmediums ist dabei abhängig von deren Brechungsindexdifferenz. Der Ablenkungswinkel zwischen dem eingestrahlten und dem durchquerenden Strahlenbündel ist daher ein Maß für den Brechungsindex des Prozessmediums. Der Ablenkungswinkel wiederum wird beispielsweise anhand der Position eines Fokuspunktes des durchquerenden Strahlenbündels auf einer zur optischen Achse des eingestrahlten Strahlenbündels senkrechten Detektorebene ermittelt. Nachteilig an bekannten Durchlicht-Refraktometern ist, dass sie in der Regel zwei Zugänge zum Prozessmedium benötigen.

Ein Durchlicht-Refraktometer mit einem einseitigen Prozesszugang ist in der Patentschrift DE 10 2007 05 07 31 B3 beschrieben. In dem darin beschriebenen Refraktometer wird über einen einzigen Prozesszugang Licht eingestrahlt, das mittels einer Beleuchtungsoptik kolliminiert wird, an einer Umlenkoptik umgelenkt wird, anschließend das Prozessmedium und das Messprisma durchquert, und durch eine Abbildungsoptik auf eine Detektorebene fokussiert wird. Die Detektorebene ist vorteilhaft auf der Einstrahlseite angeordnet, wodurch der einseitige Zugang zum Prozessmedium ermöglicht wird.

Ein weiteres Durchlicht-Refraktometer ist in der Patentschrift US 5,347,358 beschrieben.

In der zum Zeitpunkt des Anmeldetags dieser Anmeldung noch unveröffentlichten Anmeldung der Anmelderin mit der Anmeldenummer 102018116409.2 ist ein Durchlicht-Refraktometer mit einseitigem Prozesszugang beschrieben, welches eine gemeinsame Abbildungs- und Beleuchtungsoptik verwendet. Dadurch kann vorteilhaft der Durchmesser eines Zugangs zum Prozessmedium verkleinert werden.

Allen Refraktometern ist dabei gemein, dass sie ein Messprisma, eine Lichtquelle, eine optische Detektoreinheit zur Detektion des optischen Signals und eine Regel-/Auswerteeinheit zur Reglung und/oder Auswertung des optischen Signals und anschließenden Ermittlung des Brechungsindex des Prozessmediums aufweisen.

In den vorstehend genannten Industrien liegen regelmäßig Prozesszugänge mit sehr kleinen Durchmessern vor. Durch die im Stand der Technik übliche Integration der Lichtquelle und/oder der optischen Detektoreinheit (bspw. einer Kamerazeile) in das Refraktometer weist dieses in der Regel selbst bei platzsparender Anordnung und/oder Dimensionierung seiner Komponenten Abmessungen auf, die problematisch für Prozesszugänge mit kleinem Durchmesser sind.

Der Erfindung liegt daher die Aufgabe zugrunde, ein Refraktometer anzugeben, das sich auch für kleine Prozesszugänge eignet.

Die Aufgabe wird gelöst durch ein Refraktometer zur Bestimmung des Brechungsindex eines Prozessmediums sowie durch ein Verfahren zur Bestimmung des Brechungsindex eines Prozessmediums mit einem erfindungsgemäßen Refraktometer.

Bezüglich des Refraktometers wird die Aufgabe gelöst durch ein Refraktometer zur Bestimmung des Brechungsindex eines Prozessmediums, aufweisend die Merkmale von Anspruch 1.

Die Vorteile der Erfindung sind die folgenden:
- Mittels des zumindest einen Lichtleiters wird eine Trennung des Refraktometers in eine aktive, Licht aussende, empfangene und auswertende Betriebseinheit und eine im Wesentlichen passiv messsende Sondeneinheit ermöglicht. Nur die Sondeneinheit muss in das Prozessmedium eingebracht werden. Die Betriebseinheit ist von der Sondeneinheit absetzbar bzw. räumlich getrennt anordenbar. Dadurch kann die Sondeneinheit im Vergleich zu einem Refraktometer aus dem Stand der Technik mit einem reduzierten Durchmesser realisiert werden. Das erfindungsgemäße Refraktometer ist somit auch im Falle von Prozesszugängen mit besonders kleinem Durchmesser einsetzbar, insbesondere kleiner als 45mm, welche für die Sondeneinheit des erfindungsgemäßen Refraktometers weiterhin zugänglich sind.
- Die Betriebseinheit kann vorteilhaft von dem Prozess abgesetzt angeordnet werden. In den vorstehend genannten Industrien herrschen oftmals sehr hohe Temperaturen. Diese können etwa bei regelmäßig durchzuführenden Vor-Ort-Reinigungen und/oder Sterilisationen (englisch: Cleaning- bzw. Sterilization-in-Process, kurz CIP bzw. SIP) auftreten. Dabei werden Temperaturen bis zu 140°C überschritten. In der erfindungsgemäßen Lösung sind die temperaturempfindlichen Komponenten des Refraktometers, d.h. die elektronische und/oder elektrische Bauteile aufweisenden Komponenten wie einer Lichtquelle, die optische Detektoreinheit sowie die Regel-/Auswerteeinheit mit bspw. einem Mikroprozessor und einer der Verarbeitung dienenden Software der Betriebseinheit zugeordnet. Diese ist außerhalb des Prozessmediums (insb. außerhalb eines Prozessbehältnisses für das Prozessmedium) anordenbar. Dadurch wird eine einfache Möglichkeit der thermische Isolierung der temperaturempfindlichen Komponenten von dem Prozessmedium oder z.B. einem Reinigungsmedium ermöglicht. Insbesondere für ein Refraktometer mit kleinen Abmessungen würde sich ansonsten, d.h. in dem Fall einer nicht-absetzbaren Betriebseinheit, eine ausreichende thermische Isolation als sehr schwierig gestalten.
- Die Sondeneinheit selbst muss prinzipiell keine elektronischen Bauelemente für die Brechungsindexbestimmung aufweisen. Da das medienberührende Messprisma der Sondeneinheit meist aus einem ohnehin chemisch inerten und hochtemperaturbeständigen Material, typischerweise einem Glas oder Saphir, besteht, ist das Messprisma ohne Weiteres hohen Temperaturen und/oder weiteren extremen Prozess- und/oder Umgebungsbedingungen aussetzbar. Gleiches gilt für den Lichtleiter, der an dem in die Sondeneinheit mündenden zweiten Endabschnitt Temperaturen von bis zu 260°C standhält. Dadurch ist das erfindungsgemäße Refraktometer - je nach Ausgestaltung - prinzipiell auch diesen sehr hohen Temperaturen aussetzbar.
- An die geometrische Ausgestaltung (Länge, Form, etc.) des zumindest einen Lichtleiters gibt es im Wesentlichen kaum Einschränkungen. Dieser kann- je nach spezieller Anforderung -beispielsweise als flexibel, starr oder starr-flexibel ausgestaltet sein. Hierbei weist ein starr-flexibler Lichtleiter sowohl starre als auch flexible Abschnitte auf.
- Mittels der Länge und/oder des Verlaufs bzw. der Führung des zumindest einen Lichtleiters ist das Refraktometer an die an dem jeweiligen Einsatzort des Refraktometers herrschenden Platzverhältnisse anpassbar. Dies ist vorteilhaft für z.B. schwer zugängliche Prozesse bzw. Prozessbehältnisse.

Die erfindungsgemäße Lösung eignet sich für die eingangs beschriebenen Durchlichtrefraktometer. Bei Durchlichtrefraktometern handelt es sich bei dem zumindest einen von dem Brechungsindex des Prozessmediums abhängigen optischen Signal bspw. um die Position zumindest eines Fokuspunktes eines Strahlenbündels, welches an der medienberührenden Oberfläche Lichtbrechung erfahren hat. Im Vergleich dazu handelt es sich bei Grenzwinkelrefraktometern bei dem zumindest einen von dem Brechungsindex des Prozessmediums abhängigen optischen Signal bspw. um die Position eines hell-dunkel Übergangs in der Intensität des an der Grenzfläche reflektierten Lichts und einem zu dieser Position gehörigen Einfallswinkel des eingestrahlten Lichts, der dem Grenzwinkel der Totalreflexion entspricht.

Bei der zumindest einen Lichtquelle handelt es sich beispielsweise um eine LED. Die optische Detektoreinheit umfasst bspw. eine Kamera mit einer vorgegebenen Anzahl von Pixeln. Es ist z.B. möglich, dass die Kamera genau eine Zeile mit Pixeln umfasst.

Erfindungsgemäß ist/sind der/die optische/n Lichtleiter als ein Faserbündel mit mehreren Fasern ausgestaltet, wobei einer der Lichtleiter zumindest eine mit der zumindest einen

Lichtquelle verbundene Beleuchtungsfaser und einer der Lichtleiter zumindest zwei mit der optischen Detektoreinheit verbundene Abbildungsfasern umfasst, und wobei das/die Beleuchtungsfaser/n dazu ausgestaltet ist/sind, das Licht von der zumindest einen Lichtquelle zu der Sondeneinheit zu leiten und die Abbildungsfasern dazu ausgestaltet sind, das zumindest eine optische Signal von der Sondeneinheit zu der optischen Detektoreinheit zu leiten.

Prinzipiell herrschen keine Einschränkungen an die Anzahl der Lichtleiter. Es können z.B. zwei komplett getrennte Lichtleiter für Beleuchtungsfasern und Abbildungsfasern verwendet werden. Ferner können die Lichtleiter an unterschiedliche Eingänge der Sondeneinheit geführt werden. Bevorzugt weist das Refraktometer eine Vielzahl von Abbildungsfasern auf, insb. zumindest drei. Bevorzugt weist das Refraktometer zumindest zwanzig, und besonders bevorzugt zumindest vierzig Abbildungsfasern auf. Je nach Ausgestaltung der optischen Detektoreinheit und der Abbildungsfasern ergibt sich eine optimale Anzahl an Abbildungsfasern, mit welcher das Refraktometer eine möglichst große Sensitivität aufweist. Dabei kann die Anzahl der Abbildungsfasern der Anzahl der Pixel der optischen Detektoreinheit entsprechen. Dies muss aber nicht unbedingt der Fall sein. Da das Licht in die Abbildungsfasern unter einem eingeschränkten Winkelbereich einkoppelt, kann ferner mittels geschickten Designs vorteilhaft das Signal/Rauschverhältnis optimiert werden.

Erfindungsgemäß ist einer der oder der Lichtleiter als ein Faserbündel ausgestaltet, das sowohl Beleuchtungsfaser/n als auch Abbildungsfasern umfasst, wobei sich das Faserbündel in dem in die Betriebseinheit mündenden ersten Endabschnitt in einen ersten Faserbündelzweig mit den/der Beleuchtungsfaser/n und in einen zweiten Faserbündelzweig mit den Abbildungsfasern verzweigt.

Für einen gemeinsamen Lichtleiter, umfassend Beleuchtungs- und Detektionsfasern, werden mittels der Verzweigung in der Betriebseinheit in den ersten und den zweiten Faserbündelzweig die jeweiligen Faserbündel getrennt zu der/den Lichtquelle/n und der optischen Detektoreinheit geführt werden. Dadurch sind die Lichtquelle/n und die optische Detektoreinheit voneinander trennbar, insbesondere ausreichend voneinander beabstandet anordenbar. Es wird also eine Trennung zwischen der/den Lichtquelle/n und der optischen Detektoreinheit vereinfacht. Dabei findet die Verzweigung erst an dem ersten Endabschnitt ab, so dass an den daran angrenzenden Bereich die Beleuchtungs- und Abbildungsfaser/n in einem einzigen, gemeinsamen Faserbündel geführt sind.

Erfindungsgemäß handelt es sich um ein Durchlicht-Refraktometer, dessen Sondeneinheit ein optisches System mit einer in Längsrichtung der Sondeneinheit verlaufenden optischen Achse aufweist, das dazu ausgestaltet ist, aus dem von dem/den Lichterleitern weitergeleiteten Licht ein kolliminiertes Strahlbündel zu erzeugen, wobei das Messprisma zumindest zwei ebene und gegeneinander geneigte Oberflächen aufweist, die an der mediumberührenden Oberfläche des Messprismas angeordnet sind, und wobei die beiden gegeneinander geneigten Oberflächen jeweils in Bezug zu einer zur optischen Achse senkrechten Ebene um eine

Neigungsachse und in zueinander entgegengesetzte Richtungen geneigt sind, wobei die Neigungsachse senkrecht zur optischen Achse ist. Insbesondere ist die Neigung der beiden gegeneinander geneigten Oberflächen im Wesentlichen symmetrisch zur optischen Achse.

Durch die beiden gegeneinander geneigten Oberflächen des Messprismas werden als optisches Signal zwei Fokuspunkte erzeugt, deren Abstand ein Maß für den Brechungsindex des Prozessmediums darstellt.

Erfindungsgemäß weist die Sondeneinheit ein Umlenkelement auf, das in Bezug zu dem optischen System derart entlang der optischen Achse angeordnet ist, dass
- das Strahlenbündel in einem ersten Durchgang ein erstes Mal das Messprisma und das Prozessmedium durchquert, wobei das Strahlenbündel an der medienberührende Oberfläche ein erstes Mal Lichtbrechung erfährt,
- das Strahlenbündel am Umlenkelement umgelenkt wird,
- das Strahlenbündel in einem zweiten Durchgang ein zweites Mal das Messprisma und das Prozessmedium durchquert, wobei das Strahlenbündel an der medienberührende Oberfläche ein zweites Mal Lichtbrechung erfährt, und
- das optische System anschließend das Strahlenbündel auf einen der Lichtleiter zurückfokussiert und
- der eine der Lichtleiter das zumindest eine vom Brechungsindex des Prozessmediums abhängige optische Signal an die Betriebseinheit zurückleitet.

Bei dem Umlenkelement handelt es sich beispielsweise um einen Spiegel oder einen Retroreflektor.

Ein Vorteil dieser Ausgestaltung ist, dass (siehe die noch unveröffentlichte Anmeldung mit der Anmeldenummer 102018116409.2) das optische System als eine gemeinsame Abbildungs- und Beleuchtungsoptik dient. Mittels des Umlenkelements wird das gebrochene Licht in Einstrahlrichtung zurückgelenkt. Es können z.B. vorteilhaft die Abbildungs- und Beleuchtungsfasern an einem gleichen Endbereich der Sondeneinheit in die Sondeneinheit münden.

Abseits der Erfindung ist es selbstverständlich auch möglich, die Sondeneinheit ohne Umlenkelement und damit mit jeweils separater Abbildungs- und Beleuchtungsoptik auszugestalten. In diesem Fall liegen die Abbildungsfasern dann ohne weitere Maßnahmen zunächst auf einem den Beleuchtungsfasern gegenüberliegenden Endbereich der Sondeneinheit. Aufgrund der Möglichkeit der flexiblen Ausgestaltung der Lichtleiter kann jedoch z.B. ein die Abbildungsfasern umfassender Lichtleiter derart geführt, insbesondere gebogen werden, dass dieser an dem gleichen Endbereich in die Sondeneinheit mündet wie ein die Beleuchtungsfasern umfassender Lichtleiter, um dadurch die Abbildungsfasern an den gleichen Endbereich zu führen wir die Beleuchtungsfasern. Durch die Verwendung der flexiblen Lichtleiter wird daher auch ohne explizite Verwendung eines Umlenkelement ein einseitiger Prozesszugang ermöglicht.

Ferner herrschen (für eine Sondeneinheit mit oder ohne Umlenkelement) keine Einschränkungen an die Anordnung des Messprismas im Bezug zu dem Prozessmedium, solange die gegeneinander geneigten Oberflächen des Messprismas mediumberührend sind und wie erforderlich die Grenzfläche Prozessmedium-Messprisma vorliegt.

Bspw. kann die Sondeneinheit ein Prozessfenster umfassen, durch das das kolliminierte Strahlenbündel vor dem ersten Durchgang in einer Eintrittsrichtung in das Prozessmedium eintritt und durch das das Strahlenbündel anschließend zu dem zweiten Durchgang in der Austrittsrichtung aus dem Prozessmedium austritt. Das Messprisma, das Prozessfenster und das Umlenkelement sind derart zueinander angeordnet, dass das Strahlenbündel in dem ersten Durchgang zunächst das Prozessmedium und anschließend das Messprisma durchquert, und in dem zweiten Durchgang in umgekehrter Reihenfolge das Messprisma und anschließend das Prozessmedium durchquert. In Bezug auf den Weg des Strahlenbündels des ersten Durchgangs ist die Anordnung in dieser Ausgestaltung also Prozessfenster-Prozessmedium-Messprisma-Umlenkelement.

Die Anordnung Messprisma- Prozessmedium-Umlenkelement ist selbstverständlich auch möglich. In einer alternativen Ausgestaltung sind daher das Messprisma und das Umlenkelement derart zueinander angeordnet, dass das Strahlenbündel in dem ersten Durchgang zunächst das Messprisma und anschließend das Prozessmedium durchquert, und in dem zweiten Durchgang in umgekehrter Reihenfolge zunächst das Prozessmedium und anschließend das Messprisma durchquert, wobei das kolliminierte Strahlenbündel über das Messprisma in das Prozessmedium eintritt und über das Messprisma aus dem Prozessmedium austritt. Der Vorteil dieser Ausgestaltung ist, dass das Messprisma selbst als ein Prozessfenster dient. Es wird also kein zusätzliches Prozessfenster benötigt wird.

Für eine nicht der Erfindung entsprechende Sondeneinheit ohne Umlenkelement und daher mit genau einem Durchgang an der mediumberührenden Grenzfläche sind mögliche Anordnungen Messprisma- Prozessmedium-Prozessfenster oder Prozessfenster- Prozessmedium-Messprisma.

In einer bevorzugten Variante der vorherigen Ausgestaltung weist das Refraktometer genau einen Lichtleiter auf, der dazu ausgestaltet ist, das von der zumindest einen Lichtquelle ausgesandte Licht an die Sondeneinheit weiterzuleiten und das zumindest eine vom Brechungsindex des Prozessmediums abhängige optische Signal an die Betriebseinheit zurückzuleiten. Der genau eine gemeinsame Lichtleiter umfasst dann sowohl die Abbildungs- als auch die Beleuchtungsfasern.

In einer Weiterbildung des Refraktometers sind die mehreren Abbildungsfasern an dem in die Sondeneinheit mündenden zweiten Endabschnitt entlang einer zur optischen Achse im Wesentlichen senkrechten Richtung versetzt angeordnet, insb. im Wesentlichen gleich beabstandet versetzt angeordnet.

Insbesondere sind die mehreren Abbildungsfasern entlang einer Richtung angeordnet, die im Wesentlichen auch senkrecht zur Neigungsachse ist.

Da für das Durchlichtrefraktometer der Abstand der Fokuspunkte in dieser Richtung ein Maß für den Brechungsindex darstellt, wird durch den Durchmesser und/oder die Anordnung der Abbildungsfasern an dem in die Sondeneinheit mündenden zweiten Endabschnitt der Messbereich des Durchlichtrefraktometers begrenzt.

Ferner wird gibt es wie vorstehend erwähnt eine optimale Anzahl von Abbildungsfasern, die an dem zweiten Endabschnitt in dieser Richtung versetzt angeordnet sind. Um Anforderungen an die Justage der Komponenten der Sondeneinheit, bspw. des Umlenkelements, und deren Temperaturstabilität zu reduzieren, können ferner die Abbildungsfasern in der Neigungsrichtung zusätzlich doppelt, dreifach oder n-fach ausgelegt werden.

Gleiches gilt für die Beleuchtungsfasern. In einer weiteren Weiterbildung des Refraktometers weist dieses daher mehrere, insb. zumindest zwei, Beleuchtungsfasern, die mit einer gemeinsamen Lichtquelle oder mehreren, insb. zumindest zwei, Lichtquellen verbunden sind, und wobei die Beleuchtungsfasern jeweils dazu ausgestaltet ist, das Licht der damit verbundenen Lichtquelle von der Betriebseinheit zu der Sondeneinheit zu leiten.

In einer Ausgestaltung der vorstehend genannten Weiterbildung sind die mehreren Beleuchtungsfasern an dem in die Sondeneinheit mündenden zweiten Endabschnitt entlang einer zur optischen Achse und zur Neigungsachse im Wesentlichen senkrechten Richtung versetzt angeordnet.

In einer weiteren Ausgestaltung dieser Weiterbildung weist das Refraktometer mehrere, insb. zumindest zwei, jeweils von der Regel-/Auswerteeinheit separat ansteuerbare Lichtquellen und jeweils mit den Lichtquellen verbundene Beleuchtungsfasern auf.

Insbesondere sind die mit den separat ansteuerbaren Lichtquellen verbundenen Beleuchtungsfasern an dem in die Sondeneinheit mündenden zweiten Endabschnitt entlang der zur optischen Achse und zur Neigungsachse im Wesentlichen senkrechten Richtung im Wesentlichen gleich beabstandet versetzt angeordnet.

Mittels der separat ansteuerbaren Lichtquellen wird eine Vergrößerung des Messbereichs des Refraktometers erreicht, wobei hierbei auf die nachstehend genannten Ausführungsbeispiele verwiesen wird.

In einer weiteren Ausgestaltung des Refraktometers weist dessen Sondeneinheit eine hülsenförmige Ummantelung auf, die durch zumindest eine Aussparung unterbrochen ist, mittels derer bei der Bestimmung des Brechungsindex des Prozessmediums das Prozessmedium an die mediumberührende Oberfläche des Messprismas strömbar ist.

Die hülsenförmige Ummantelung ist bevorzugt von hoher chemischer und/oder mechanischer Beständigkeit und/oder hoher Beständigkeit gegenüber Temperaturschwankungen des Prozessmediums. Hierzu ist die hülsenförmige Ummantelung bspw. aus einem Stahl, insb. einem Edelstahl, oder aber auch Glas oder Teflon.

In einer weiteren Ausgestaltung des Refraktometers ist die Sondeneinheit in einem durch eine maximale Temperatur begrenzten Temperaturbereich einsetzbar, wobei die maximale Temperatur größer als 200°C, insb. größer als 250° C ist. Die Sondeneinheit bzw. das Refraktometer kann also für ein Prozessmedium eingesetzt und/oder Umgebungsbedingungen ausgesetzt werden, bei denen sehr hohe Temperaturen über 260° C erreicht werden. Die maximale Temperatur ist in einer Ausgestaltung kleiner als 1000°C.

In einer Ausgestaltung des Refraktometers weist dieses zumindest einen Temperatursensor auf der dazu ausgestaltet ist, die Temperatur des Prozessmediums zu ermitteln, und wobei die Regel-/Auswerteeinheit dazu ausgestaltet ist, eine aus dem Brechungsindex ableitbare Prozessgröße des Prozessmediums zu bestimmen und die von dem/den Temperatursensor/en ermittelte Temperatur bei der Bestimmung der aus dem Brechungsindex abgeleiteten Prozessgröße des Prozessmediums zu berücksichtigen.

Der Temperatursensor ist bevorzugt an einem an die Aussparung angrenzenden Bereich der Sondeneinheit untergebracht, um die Temperatur des Prozessmediums zu ermitteln. Bei der ableitbaren Prozessgröße des Prozessmediums handelt es sich bspw. um eine Stoffkonzentration, etwa die Zuckerkonzentration. Der Temperatursensor kann zum Beispiel als ein widerstandsbasiertes Thermometer wie beispielsweise ein Pt100 oder Pt1000 oder als ein thermospannungsbasiertes Thermometer bzw. Thermoelement, oder ein anderer aus dem Stand der Technik bekanntes Temperatursensor ausgestaltet sein. Derartige Sensoren benötigen oftmals nur einen Anschluss an eine Leiterschleife zur Versorgung des Temperatursensors mit elektrischer Energie und zur Übertragung des von dem Temperatursensors erzeugten Messsignals an die Betriebseinheit. Die hierfür benötigten Anschlussdrähte der Leiterschleife können daher im Wesentlichen parallel zu einem der oder dem Lichtleiter geführt werden.

In einer weiteren Ausgestaltung ist der Temperatursensor dazu ausgestaltet, die relative Feuchte zu messen. Es handelt sich also vorteilhaft um einen kombinierten Temperatur- und Feuchtesensor. In einer dazu alternativen Ausgestaltung wird ein zusätzlicher Feuchtesensor verwendet. Die Messung der Feuchte (mit dem kombinierten Temperatur- und Feuchtesensor oder zusätzlichen Feuchtesensor) dient beispielsweise dazu, Leckagen des Prozessmediums in einem an Aussparung angrenzenden Bereich der Sondeneinheit zu detektieren.

In einer Ausgestaltung des Refraktometers ist der Durchmesser der Sondeneinheit, insb. der hülsenförmigen Ummantelung, kleiner als 45 mm, insb. kleiner 20 mm, vorzugsweise kleiner als 15 mm.

In einer Ausgestaltung des Refraktometers ist das Refraktometer zumindest teilweise, insb. dessen Sondeneinheit, in eine in das Prozessmedium verfahrbare Schleusenarmatur einsetzbar.

In den eingangs genannten Industrien sind Schleusenarmaturen, insb. sogenannten Wechselarmaturen, weit verbreitet, mit denen bspw. elektrochemischen Sensoren manuell oder automatisch axial zwischen einer Prozessstellung und einer Servicestellung verfahren werden. Da sowohl in der Prozessstellung als auch in der Servicestellung die Wechselarmatur ein Prozessbehältnis für das Prozessmedium fluiddicht abdichtet, können die elektrochemische Sensoren eingeführt und/oder entnommen werden, ohne dass dabei laufende Prozesse unterbrochen werden müssen.

Bezüglich des Verfahrens wird die Aufgabe gelöst durch ein Verfahren zur Bestimmung des Brechungsindex eines Prozessmediums, mit einem erfindungsgemäßen Refraktometer, in dem
- von der zumindest einen Lichtquelle Licht ausgesandt wird,
- das von der zumindest einen Lichtquelle ausgesandte Licht von dem/den Lichtleiter/n an die Sondeneinheit weitergeleitet wird,
- das Licht an einer durch eine mediumberührende Oberfläche des Messprismas gebildete Grenzfläche zwischen Prozessmedium und Messprisma gebrochen wird, bei der von der Sondeneinheit zumindest ein vom Brechungsindex des Prozessmediums abhängiges optisches Signal erzeugt wird,
- das zumindest eine vom Brechungsindex des Prozessmediums abhängige optische Signal von dem/den Lichtleiter/n an die Betriebseinheit zurückgeleitet wird,
- das zumindest eine optische Signal von der optischen Detektoreinheit an die Regel-/Auswerteinheit übermittelt wird, und
- von der Regel-/Auswerteinheit der Brechungsindex des Prozessmediums anhand des zumindest einen übermittelten optischen Signals und des vorgegebenen Brechungsindex des Messprismas bestimmt wird.

In einer Ausgestaltung des Verfahrens weist das Refraktometer mehrere, insbesondere zumindest zwei, jeweils von der Regel-/Auswerteeinheit separat ansteuerbare Lichtquellen auf, wobei das Refraktometer zeitlich aufeinanderfolgend in verschiedenen Betriebsmodi betrieben wird, in denen
- jeweils genau eine der mehreren Lichtquellen des Refraktometers verwendet wird,
- das zu dem jeweiligen Betriebsmodi gehörige optische Signal gespeichert wird,
und wobei von der Regel-/Auswerteinheit der Brechungsindex des Prozessmediums anhand der Gesamtheit der gespeicherten optischen Signale aus allen Betriebsmodi und anhand des vorgegebenen Brechungsindex des Messprismas bestimmt wird.

Mittels des Betriebs des Refraktometers in unterschiedlichen Betriebsmodi mit jeweils einer der mehreren separat ansteuerbaren Lichtquellen wird der Messbereich des Refraktometers vergrößert, wobei hierbei wieder auf die nachfolgend genannten Ausführungsbeispiele verwiesen wird.

Die Erfindung wird anhand der nachfolgenden, nicht maßstabsgetreuen Figuren näher erläutert, wobei gleiche Bezugszeichen gleiche Merkmale bezeichnen. Wenn es die Übersichtlichkeit erfordert oder es anderweitig sinnvoll erscheint, wird auf bereits erwähnte Bezugszeichen in nachfolgenden Figuren verzichtet. Es zeigen:
Fig. 1a-1e: Verschiedene Ausgestaltungen des erfindungsgemäßen Refraktometers in einer Schnittansicht;
Fig. 2: Eine perspektivische Darstellung einer Ausgestaltung eines erfindungsgemäßen Refraktometers;
Fig. 3a,b: Verschiedene Anordnungen der Beleuchtungsfasern und Abbildungsfasern in unterschiedlichen Ausgestaltungen eines erfindungsgemäßen Refraktometers;
Fig. 4a,b: Eine Ausgestaltung eines erfindungsgemäßen Refraktometers mit separat ansteuerbaren Lichtquellen.

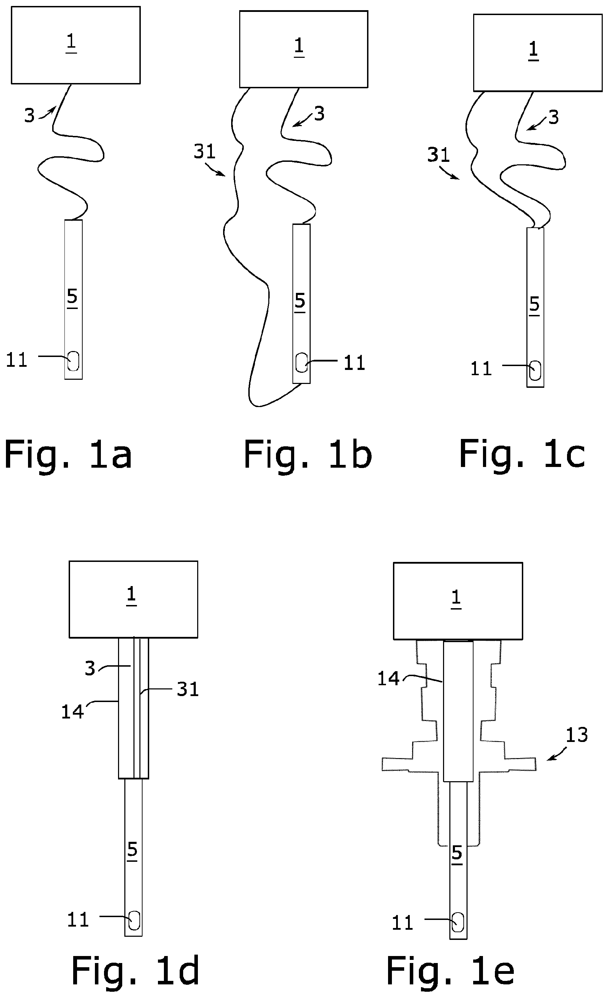

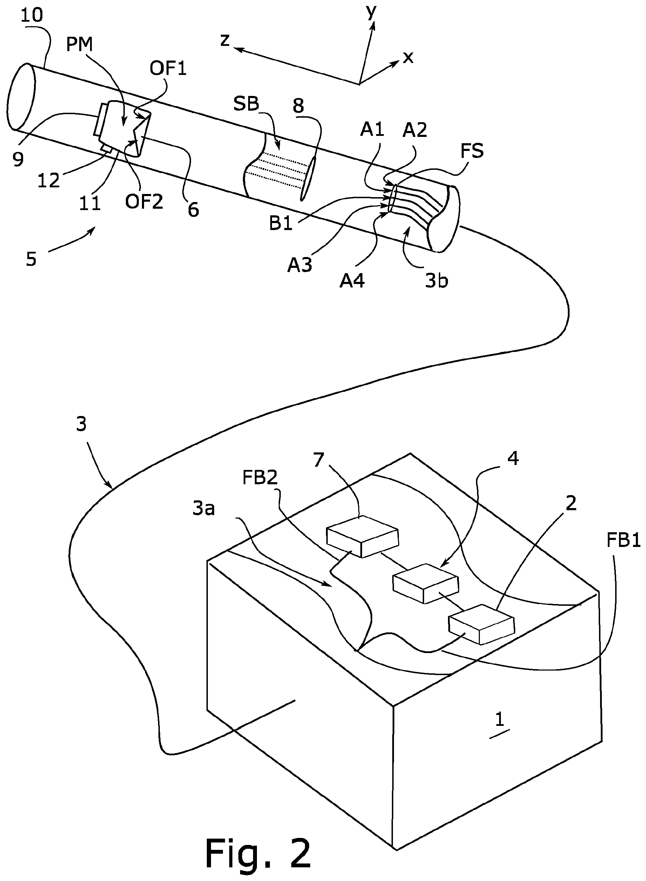

In Fig. 1a bis 1e sind verschiedene Ausgestaltungen eines erfindungsgemäßen Refraktometers zur Messung des Brechungsindex eines Prozessmediums PM dargestellt. Dieses weist eine Sondeneinheit 5 auf, die mittels zumindest eines Lichtleiters (Fig. 1a: genau ein Lichtleiter) mit einer Betriebseinheit 1 verbunden ist. In der Betriebseinheit 1 ist zumindest eine Lichtquelle 2 (siehe Fig. 2) angeordnet, deren Licht über den Lichtleiter 3 (Fig 1. a) oder einen der Lichtleiter (Fig. 1b-d) an die Sondeneinheit 5 geleitet wird. Die Sondeneinheit weist ein Messprisma 6 (siehe Fig. 2) mit einer medienberührenden Oberfläche OF auf. Die medienberührenden Oberfläche OF ist in einem Messbetrieb d.h. für den Fall einer in das Prozessmedium PM eingebrachten bzw. eingetauchten Sondeneinheit 5 über eine Aussparung 11 an der Sondeneinheit 5 anströmbar. Die Sondeneinheit 5 ist dabei stabil gegenüber extremen Prozessbedingungen, wie etwa hohen Prozesstemperaturen.

Nach einer Brechung des weitergeleiteten Lichts an der medienberührenden Oberfläche OF erzeugt die Sondeneinheit 5 ein optisches Signal OS, welches an die Betriebseinheit 1 durch den ersten Lichtleiter 3 (Fig. 1a) oder einen der weiteren Lichtleiter 31 (Fig. 1b-d) an die Betriebseinheit 1 zurückgeleitet, dort erfasst und weiterverarbeitet wird. Die Sondeneinheit 5 ist also im Wesentlichen passiv messend, wohingegen die Betriebseinheit dem aktiven Betrieb des Refraktometers beim Messen des Brechungsindex des Prozessmediums dient.

Je nach dem Messprinzip des Refraktometers bzw. Ausgestaltung der Sondeneinheit 5 ergeben sich verschiedene mögliche Anordnung an den oder die Lichtleiter 3,31. So kann beispielsweise wie in Fig. 1b gezeigt für ein Durchlichtrefraktometer das Licht mit dem ersten Lichtleiter 3 an einem ersten Endbereich der Sondeneinheit 5 hingeleitet werden und nach Brechung an der medienberührenden Oberfläche OF des Messprismas 6 mit einem zweiten Lichtleiter 31 das bei der Brechung erzeugte optische Signal OS an die Betriebseinheit zurückgeleitet werden, wobei der zweite Lichtleiter 31 mit der Sondeneinheit 5 an dem ersten Endbereich gegenüberliegenden zweiten Endbereich der Sondeneinheit 5 verbunden ist.

Ggf. kann dieser zweite Lichtleiter 31 auch bereits im Inneren der Sondeneinheit 5 derart geführt bzw. gebogen werden, dass dieser wie in Fig. 1c gezeigt in denselben Endbereich mündet wie der erste Lichtleiter 3.

Für ein Durchlichtrefraktometer aufweisend ein Umlenkelement (siehe Ausgestaltung in Fig. 2) in der Sondeneinheit 5 (vgl. die noch unveröffentlichten Anmeldung mit der Anmeldenummer 102018116409.2 der Anmelderin betreffend ein Durchlicht-Refraktometer mit einseitigem Prozesszugang) oder für ein Grenzwinkel-Refraktometer wird das optische Signal OS wieder in Richtung der Einstrahlseite zurückgeleitet, so dass die in Fig. 1c oder 1a (für den Fall eines einzigen Lichtleiters 3 mit verschiedenen Fasern) gezeigten Ausgestaltungen möglich sind. Der bzw. die Lichtleiter 3;31 kann als flexibel (Fig. 1a-1c), starr (Fig. 1d) oder auch als starr-flexibel (nicht explizit gezeigt) ausgestaltet sein.

Gegebenenfalls kann das Refraktometer noch eine den/die Lichtleiter 3;31 umhüllende Führung 14 aufweisen. Der Lichtleiter 3;31 ermöglicht eine variable Länge des an die Sensoreinheit 5 angrenzenden Bereichs des Refraktometers und somit eine einfache thermische Isolierung zwischen Sensoreinheit 5 und Betriebseinheit 1.

Die Länge der Sondeneinheit 5 beträgt - je nach Ausgestaltung- typischerweise zwischen 3cm und 30 cm. Ihr Durchmesser ist vorzugsweise als ein in der Prozessautomatisierung üblicher Standarddurchmesser gewählt, wie bspw. 40mm oder 12mm.

In Fig. 1e ist ein in eine Schleusenarmatur 13 eingesetztes Refraktometer gezeigt. Bevorzugt ist das Refraktometer derart in die Schleusenarmatur 13 einsetzbar, dass in der eingefahrenen Stellung der Schleusenarmatur 13 die Sondeneinheit 5 bzw. deren die Aussparung 11 aufweisender Endabschnitt in Kontakt mit dem Prozessmedium PM steht.

Weitere Details der Sondeneinheit 5 und der Betriebseinheit 1 sind in Verbindung mit einer in Fig. 2 gezeigten perspektivischen Ansicht einer Ausgestaltung des Refraktometers gezeigt. Die Betriebseinheit 1 (am unteren Bildrand) umfasst eine Lichtquelle 2, hier eine LED, und eine optische Detektoreinheit 7 mit einer Kamera. Die optische Detektoreinheit 7 und die Lichtquelle 2 sind mit einer Regel-/Auswerteeinheit 4 der Betriebseinheit 1 verbunden, die der Reglung der Lichtquelle 2 und/oder Auswertung des optischen Signal OS und anschließenden Ermittlung des Brechungsindex des Prozessmediums PM dient. In dieser Ausgestaltung wird bevorzugt ein einziger Lichtleiter 3 verwendet. Dieser ist hier als flexibel ausgestaltet, kann aber wie bereits erwähnt auch starr-(flexibel) sein. An einem in die Betriebseinheit 1 mündenden ersten Endabschnitt 3a des Lichtleiters 3 verzweigt sich dieser in einen ersten FB1 und in einen zweiten Faserbündelzweig FB2. Der erste Faserbündelzweig FB1 umfasst in dieser Ausgestaltung eine Beleuchtungsfaser B1 und ist in der Betriebseinheit 1 mit der als LED ausgestalten Lichtquelle 2 verbunden. Der zweite Faserbündelzweig FB2 umfasst in dieser Ausgestaltung mehrere Abbildungsfasern A1,A2,A3,A4 und ist mit der Kamera der optischen Detektoreinheit 7 verbunden. Durch die Verzweigung in die zwei Faserbündelzweige FB1,FB2 können Lichtquelle 2 und Kamera der optischen Detektoreinheit 7 voneinander entfernt angeordnet werden. Dadurch wird bevorzugt eine ungewünschte Beeinflussung der optischen Detektoreinheit 7 durch z.B. Streulicht der Lichtquelle 2 vermieden. Eine derartige Auslegung als Y-Verteiler zur Trennung von Beleuchtung und Detektion auf der Seite der Betriebseinheit 1 ist vorteilhaft aber nicht zwingend notwendig.

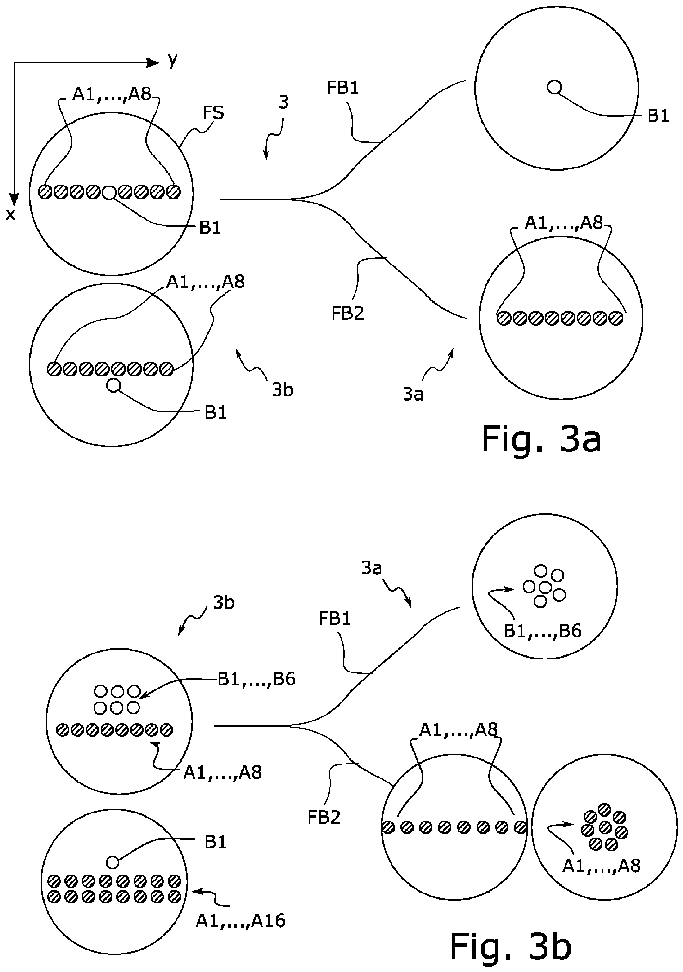

Der zweite Endabschnitt 3b mündet auf dem dem ersten Endabschnitt 3a gegenüberliegenden zweiten Endabschnitt 3b des Lichtleiters 3 mit einem Faserkopf in die Sondeneinheit 5, wobei die Beleuchtungsfaser B1 und die Abbildungsfasern A1,A1,A2,A4 an einer Faserfrontseite FS des Faserkopfs angeordnet sind. Der Übersichtlichkeit halber sind hier vier Abbildungsfasern A1,A2,A3,A3 dargestellt. Hinsichtlich der Anzahl der Fasern liegt keinerlei Beschränkungen an die Erfindung vor. Weitere Details bzgl. der Anordnung bzw. Ausgestaltung der Fasern sind im Zusammenhang mit den nachstehend erläuterten Fig. 3a,b gezeigt.

Das Licht der Beleuchtungsfaser B1 wird mittels eines optischen Systems 8, entlang dessen optischer Achse z kolliminiert und durchquert anschließend das Messprisma 6. Dieses weist auf einer medienberührenden Oberfläche zwei um eine Neigungsachse x gegeneinander geneigte Oberflächen OF1,OF2 auf. Die medienberührenden Oberflächen OF1,OF2 sind für den Fall einer in das Prozessmedium PM eingebrachten bzw. eingetauchten Sondeneinheit 5 über die Aussparung 11 von dem Prozessmedium anströmbar.

Beim Austritt aus dem Messprisma 6 über die medienberührenden Oberfläche OF1,OF2 findet eine erste, vom Brechungsindex des Prozessmediums abhängige Lichtbrechung statt. In der hier gezeigten Variante (vgl. Fig. 1a) wird nun mittels eines Umlenkelements 9 das gebrochene Strahlenbündel SB reflektiert und erfährt bei einem zweiten Übergang zwischen Prozessmedium PM und Messprisma 6 erneut Lichtbrechung. Anschließend wird es mittels des optischen Systems 8 wieder auf die Faserfrontseite FS zurückfokussiert. Messprisma 6 und Prozessmedium PM können wie bereits vorstehend erwähnt und bspw. in der 102018116409.2 gezeigt auch in umgekehrter Reihenfolge zueinander angeordnet sein, wobei in diesem Fall ein zusätzliches Prozessfenster benötigt wird.

Alternativ ist im Zusammenhang mit der in Fig. 1b-1e gezeigten Ausgestaltung wie vorstehend erwähnt eine Variante der Erfindung ohne Umlenkelement möglich, bei der das Strahlenbündel dann nur eine einmalige Brechung an der medienberührenden Oberfläche OF erfährt.

Der Abstand zwischen zwei Fokuspunkten FP1,FP2 (welche auf der Faserfrontseite FS der Abbildungsfasern A1,A2,A3,A4 erzeugt werden) in einer zu der Neigungsachse x und der optischen Achse z im Wesentlichen senkrechten Richtung y stellt in der in Fig. 2 gezeigten Ausgestaltung ein Maß für den Brechungsindex des Prozessmediums PM dar.

Ein hier als Pt100 ausgestalteter Temperatursensor 12 misst zusätzlich noch die Temperatur des Prozessmediums PM und übermittelt diese an die Regel-/Auswerteeinheit 4 über eine zu dem Lichtleichter 2 parallel geführte Messübertragungsstrecke. Die vom Temperatursensor 12 gemessene Temperatur wird vorteilhaft z.B. bei der Berechnung einer vom Brechungsindex abhängigen Zuckerkonzentration des Prozessmediums PM berücksichtigt.

Die Sondeneinheit 5 weist eine hülsenförmige Ummantelung 10 aus einem Stahl, bevorzugt einem rostfreien Edelstahl auf, in welcher die Aussparung 11 eingebracht ist. Dadurch gerät nur die hülsenförmige Ummantelung 10, das Messprisma 6 und ggf. ein Prozessfenster und/oder das Umlenkelement 9 in Kontakt mit dem Prozessmedium PM und ggf. einem Reinigungsmedium. Dadurch ist Sondeneinheit 5 vorteilhaft den extremen Prozess- und/oder Umgebungsbedingungen ohne Weiteres aussetzbar.

Die Beleuchtungs- und Abbildungsfasern B1,A1,A2, ... können gleiche oder unterschiedliche Durchmesser haben. Die Faserköpfe sind in der Regel plan geschliffen. Zur Korrektur von z.B. Bildfeldwölbung könnten die Faserköpfe jedoch auch sphärisch oder als Freiformfläche geschliffen werden.

Alle gängigen Refraktometer (auf Totalreflexion als auch auf Durchlicht basierende) sind aus den Komponenten Lichtquelle 2 (z.B. LED), optisches System 8, Messprisma 6 und optischer Detektoreinheit 7 mit vorzugsweise einer Zeilenkamera aufgebaut. Dies bedeutet, dass die vorstehend geschilderte Erfindung prinzipiell in allen gängigen, auf Durchlicht basierenden Refraktometern eingesetzt werden kann. In der in Fig. 2 beschriebenen Ausgestaltung müssen Lichtquelle 2 und Detektion in derselben Ebene liegen um durch den Lichtleiter 3 mit den Faserbündeln ersetzt werden zu können. Dies ist nicht bei allen Refraktometern der Fall, könnte jedoch durch Anpassung der Optik realisiert werden. Alternativ können zwei getrennte Lichtleiter 3,31 als Faserbündel FB mit Abbildungs- A1,A2,... und Beleuchtungsfasern B1,... verwendet werden oder das Ende der Faserbündel FB so ausgelegt werden (d.h. an der Faserfrontseite FS), dass die Enden der Beleuchtungs- B1, .. und Abbildungsfasern A1,... auf unterschiedlichen Ebenen liegen.

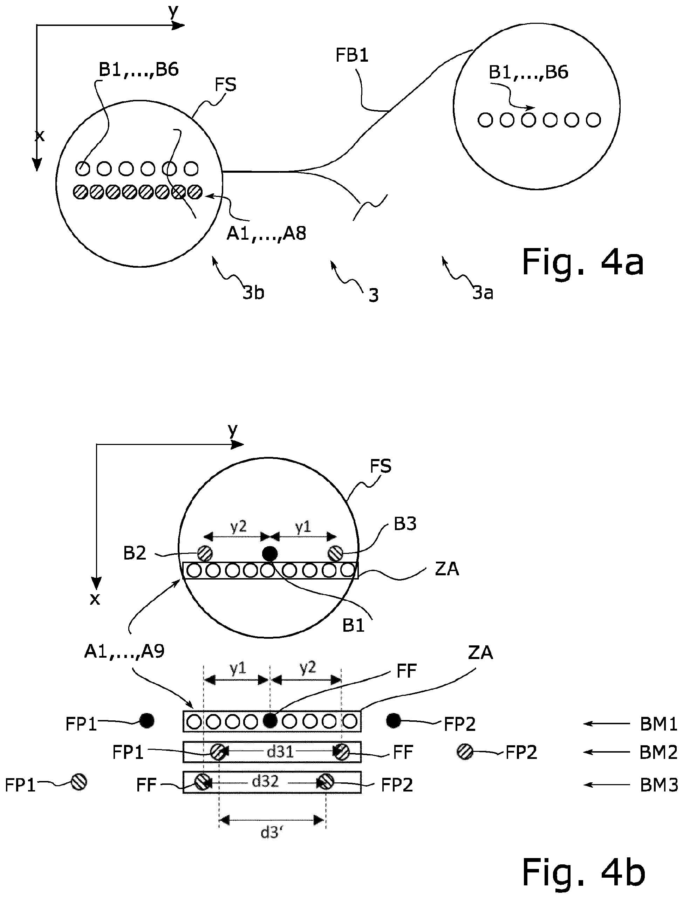

Für die genaue Anordnung der Abbildungsfasern A1,A2,... sind unterschiedliche Varianten denkbar, welche im Zusammenhang mit den in Fig. 3a-3b und Fig. 4 gezeigten Ausgestaltungen nun weiter erläutert werden. Figuren 3a-3b zeigen Schnittansichten des als ein Faserbündel FB ausgestalten Lichtleiters 3. Es ist jeweils die Faserfrontseite FS, d.h. der Querschnitt an dem Faserkopf des Faserbündels FB an dem in die Sondeneinheit 5 mündenden zweiten Endabschnitt 3b, und der Querschnitt des Faserbündels FB an dem in die Betriebseinheit 1 mündenden ersten Endabschnitt 3a gezeigt. In den Querschnitten der Fig. 3a,b sind alle Beleuchtungsfasern B1,B2,... jeweils als ungefüllte Kreise und alle Abbildungsfasern A1,A2, .... als schraffierte Kreise dargestellt.

Wie in der linken Bildhälfte der Fig. 3a gezeigt sind an dem in die Sondeneinheit 5 mündenden zweiten Endabschnitt 3b die Abbildungsfasern A1,..., A8 entlang einer Richtung y angeordnet, in welcher der Abstand zwischen zwei Fokuspunkten FP1,FP2 ein Maß für den Brechungsindex des Prozessmediums PM darstellt, also z.B. in der zu der Neigungsachse x und der optischen Achse z im Wesentlichen senkrechten Richtung y.

Mittels des Faserbündels FB ist es auch möglich die Beleuchtungsfaser B1 in die Zeile in y-Richtung der Abbildungsfasern A1,..,A8 zu integrieren (linke Bildhälfte der Fig. 3a, oberes Bild). Dies ist besonders interessant, wenn das Refraktometer als ein Durchlichtrefraktometer mit Retroreflektor als Umlenkelement 9 ausgestaltet ist, da hier eine räumliche Trennung zwischen Beleuchtung und Detektion in der Regel schwierig ist. Andernfalls (linke Bildhälfte der Fig. 3a, unteres Bild) kann die Beleuchtungsfaser B1 zu den Abbildungsfasern A1,...,A8 in der Neigungsrichtung x leicht versetzt angeordnet sein.

Auf Seiten der Betriebseinheit 1 d.h. an dem ersten Endabschnitt 3a des Lichtleiters 3 (Fig. 3a, rechte Bildhälfte, unteres Bild) können die Abbildungsfasern A1,..., A8 auch als Zeile angeordnet werden, bspw. für den Fall der Verwendung einer optischen Detektoreinheit 7 mit einer Kamerazeile. Die Fasern können hierbei sortiert oder unsortiert sein. Im unsortierten Fall muss ein Mapping von der Regel-/Auswerteeinheit 4 durchgeführt werden, bspw. mittels einer dazu ausgestalteten Software. Die Ankopplung der optischen Detektoreinheit 7 an den Detektorausgang der Abbildungsfasern A1,...,A8 kann über eine Optik erfolgen. Alternativ kann ein Kamerachip direkt in Kontakt bzw. in sehr geringen Abstand zum Ende der Abbildungsfasern A1,...,A8 in dem zweiten Faserbündelzweig FB2 gebracht werden.

Bei Verwendung einer einzelnen Beleuchtungsfaser B1 ist diese an eine einzelne Lichtquelle 2, bspw. eine fasergekoppelte LED angeschlossen (Fig. 3a, rechte Bildhälfte, oberes Bild).

Um Anforderungen an die Justage der Umlenkung und deren Temperaturstabilität zu reduzieren, können Beleuchtung und/oder Detektion doppelt, dreifach oder n-fach ausgelegt werden, wobei n> 3. Dies ist in Fig. 3b näher dargestellt. Hier werden (linke Seite, oberes Bild) mehrere Beleuchtungsfasern B1,...,B6 verwendet, welche an dieselbe oder an unterschiedliche Lichtquellen ankoppeln 6. Die mehreren Beleuchtungsfasern B1,...,B6 können im ersten Faserbündelzweig FB1 an dem ersten Endabschnitt 3a z.B. auf möglichst geringem Platz angeordnet werden (rechte Seite, oberes Bild). Dadurch wird die Ankopplung einer einzelnen LED mit entsprechend großer Chipfläche ermöglicht. Um ein Übersprechen der Abbildungsfasern A1,...,A8 bei der Ankopplung an die optische Detektoreinheit 7 zu vermeiden können die Abbildungsfasern A1,...,A8 in dem zweiten Faserbündelzweig FB2 auf Seiten der optischen Detektoreinheit 7 in einem größeren Abstand angeordnet werden als an der Faserfronseite FS der optischen Detektoreinheit (FB2, rechte Seite, unteres Bild). Denkbar ist auch die in Fig. 3b, unteres Bild, im FB2 gezeigte kreisförmige Anordnung der Abbildungsfasern und eine Ankopplung an eine normale Kamera (d.h. keine Zeilenkamera) zu erreichen. Auch in diesem Fall ist ein Mapping der Abbildungsfasern von der Regel-/Auswerteeinheit 4 mittels z.B. einer Software notwendig. Prinzipiell ist durch ein derartiges Mapping jede Anordnung möglich.

Auch die Abbildungsfasern A1,...,A16 können mehrfach ausgelegt sein. Dies ist in Fig. 3b, linke Seite, unteres Bild gezeigt. Es werden insgesamt 16 Abbildungsfasern A1,...,A16 verwendet, die in zwei in Neigungsrichtung x zueinander parallele Zeilen in y Richtung aufgeteilt sind. Dadurch wird auch für die Abbildungsfasern A1,...,A16 die Justage vereinfacht bzw. Temperaturstabilität erhöht.

Bei der Verwendung von mehreren, von der Regel-/Auswerteeinheit 4 getrennt voneinander ansteuerbaren Lichtquellen 2 kann der Messbereich durch die Verwendung verschiedener Betriebsmodi BM1,BM2,BM3 erweitert werden. Diese Funktion kann auch durch eine weitere Auftrennung des ersten Faserbündelzweigs FB1 erreicht werden, in dem pro Beleuchtungsfaser B1,...,B6 je ein separater Anschluss verwendet wird. Wie schon in den Fig. 3a,b sind in Fig. 4a. alle Beleuchtungsfasern B1,...,B6 jeweils als ungefüllte Kreise und alle Abbildungsfasern A1,...,A8 als schraffierte Kreise dargestellt. Die Vergrößerung des Messbereichs mittels der separat ansteuerbaren Lichtquellen 2,21 ist im Folgenden für ein Durchlichtrefraktometer im Zusammenhang mit Fig. 4b detailliert erläutert, wobei im oberen Bild drei Beleuchtungsfasern B1,B2,B3 an der Faserfronseite FS gezeigt sind, durch die in zeitlichen aufeinanderfolgenden Betriebsmodi BM1,BM2,BM3 jeweils Licht an die Sondeneinheit 5 weitergeleitet wird. Es handelt sich insbesondere um zwei an der Faserfrontseite FS dezentral angeordnete Beleuchtungsfasern B3,B2 und eine dazwischenliegende zentral angeordnete Beleuchtungsfaser B1. Die zentral angeordnete Beleuchtungsfaser B1 ist in Fig. 3b als ein schwarz-gefüllter Kreis dargestellt, und die erste/zweite dezentral angeordnete Beleuchtungsfaser B3/B1 als jeweils verschieden schraffiert.

Bevorzugt stimmt ein erster Abstand y1 zwischen der ersten dezentral angeordneten Beleuchtungsfaser B3 und der zentral angeordneten Beleuchtungsfaser B1 mit einem zweiten Abstand y2 zwischen der zweiten dezentral angeordneten Beleuchtungsfaser B2 und der zentral angeordneten Beleuchtungsfaser B überein. Die Abbildungsfasern (ungefüllte Kreise) A1,...,A9 sind an der Faserfrontseite FS wie schon in Fig. 3a,3b gezeigte als Zeile ZA angeordnet.

Ist die Sondeneinheit 5 wie schon in Fig. 2 gezeigt ausgestaltet, werden in jedem der Betriebsmodi BM1,BM2,BM3 die zwei äußeren Fokuspunkte FP1,FP2 in der Ebene der Faserfrontseite FS erzeugt, deren Abstand in y-Richtung ein Maß für den Brechungsindex des Prozessmediums PM darstellt. Ferner wird ein zwischen den beiden Fokuspunkten FP1, FP2, zentral angeordneter Fix-Fokuspunkt FF erzeugt, dessen Position in y-Richtung unabhängig von dem Brechungsindex des Prozessmediums PM ist. Der Fix-Fokuspunkt FF wird durch einen in der Mitte des Strahlenbündels angeordneten Anteil erzeugt, der bei dem ersten Durchgang an einer ersten der beiden gegeneinander geneigten Oberflächen OF1;OF2 das erste Mal Lichtbrechung und bei dem zweiten Durchgang an der zweiten der beiden gegeneinander geneigten Oberflächen OF2;OF1 das zweite Mal Lichtbrechung erfährt. Diese beiden Brechungen heben sich für den Fall eines zu der optischen Achse symmetrischen Messprismas gegenseitig auf.

Zur besseren Identifikation der Fokuspunkte FP1,FP2, FF mit den Betriebsmodi BM1,BM2,BM3 sind in Fig. 4b in der unteren Bildhälfte die jeweiligen Fokuspunkte FP1;FP2; FF entsprechend der jeweils bei ihrem Erzeugen verwendeten Beleuchtungsfaser B1;B2;B3 schraffiert. Der Abstand y1,y2 ist nun so gewählt, dass für alle Beleuchtungsfasern B3,B2,B1 deren Fix-Fokuspunkt FF auf die Zeile ZA der Abbildungsfasern A1,...,A9 (ungefüllte Kreise) der Faserfrontseite FS abbildbar ist und für alle dezentralen Beleuchtungsfasern B3,B2 und alle Brechungsindizes des Prozessmediums PM aus dem Messbereich des Refraktometers zumindest einer der äußeren Fokuspunkte FP1, FP2 der dezentralen Beleuchtungsfasern B3,B2 auf die Zeile der Abbildungsfasern A1,...,A9 an der Faserfrontseite FS abbildbar ist.

Die in der Ebene der Faserfrontseite FS in dem ersten Betriebsmodus BM1 erzeugten äußern Fokuspunkte FP1,FP2 der zentralen Beleuchtungsfaser B1 müssen dabei nicht mehr unbedingt für alle Brechungsindizes des Prozessmediums PM aus dem Messbereich des Refraktometers auf die Zeile der Abbildungsfasern A1,...,A9 abbildbar sein. Je nach Brechungsindex des Prozessmediums kann gegebenenfalls nur jeweils ein äußerer Fokuspunkt FP1;FP2 aus dem zweiten und dritten Betriebsmodus BM2,BM3 auf die Zeile der Abbildungsfasern A1,...,A9 an der Faserfrontseite FS abbildbar sein.

Dies ist in dem unteren Bild in Fig. 4b für den erstem Betriebsmodus BM1 gezeigt. Hier sind in der Ebene der Faserfrontseite FS erzeugten äußern Fokuspunkte FP1, FP2 der ersten Beleuchtungsfaser aus nicht mehr auf die Zeile der Abbildungsfasern A1,...,A9 abbildbar, so dass in dem ersten Betriebsmodus BM1 nur der zentral angeordnete Fix-Fokuspunkt FF von den Abbildungsfasern A1,...,A9 erfasst wird. Aus dem ersten Betriebsmodus BM1 alleine lässt sich daher nicht mehr der Brechungsindex des Prozessmediums PM bestimmen, da die beiden äußeren Fokuspunkte FP1,FP2 (gefüllte schwarze Kreise) nicht mehr auf die Faserfronseite abbildbar sind. Durch die Verwendung der äußeren Fokuspunkte FP1,FP2 aus einem der weiteren Betriebsmodi BM2,BM3 lässt sich ein Abstand d3= 2*d31 oder d3= 2*d32 zu einem der mittleren Fix-Fokuspunkte FF aus diesem Betriebsmodus BM2;BM3 bestimmen. Der Abstand d3 stellt dann ein Maß für den Brechungsindex des Prozessmediums PM dar. Gegebenenfalls kann auch über die beiden Betriebsmodi BM2 und BM3 gemittelt werden, und ein Abstand d3= ½ ( 2*d31+2*d32) = d31 + d32 verwendet werden.

Für den Fall, dass es sich um ein getrübtes Prozessmedium PM handelt, kann der mittlere Fix-Fokuspunkt FF, je nach Brechungsindex des Prozessmediums PM, nur von geringer Lichtintensität und damit sehr schwach ausgeprägt sein. Um nicht auf den mittleren Fix-Fokuspunkt FF angewiesen sein zu müssen kann alternativ oder zusätzlich auch ein Abstand d3' zwischen den äußeren Fokuspunkten FP2,FP1 aus jeweils unterschiedlichen Betriebsmodi BM2,BM3 verwendet werden. Der Abstand d3, welcher das Maß für den Brechungsindex des Prozessmediums PM darstellt, ergibt sich nun über d3 = d3' + y1 + y2. In diesem Fall muss der Abstand der äußeren Beleuchtungsfasern B1,B3 voneinander, d.h. y1 + y2, jedoch sehr genau bekannt sein, da sich jeder Drift dieses Abstands im Messergebnis wiederspiegelt.

Selbstverständlich ist im Rahmen der Erfindung auch Kombination der in Fig.3b und Fig. 4a gezeigten Ausgestaltungen möglich.

### Bezugszeichen und Symbole

- 1: Betriebseinheit
- 2: Lichtquellen
- 3,31: Lichtleiter
- 3a/3b: erster/zweiter Endabschnitt
- 4: Regel-/Auswerteeinheit
- 5: Sondeneinheit
- 6: Messprisma
- 7: optische Detektoreinheit
- 8: optisches System
- 9: Umlenkelement
- 10: hülsenförmige Ummantelung
- 11: Aussparung
- 12: Temperatursensor
- 13: Schleusenarmatur
- 14: Führung
- PM: Prozessmedium
- OS: optisches Signal
- z: optische Achse
- x: Neigungsachse
- y: zur optischen Achse und Neigungsachse senkrechte Achse
- OF: medienberührende Oberfläche
- OF1,OF2: gegeneinander geneigte Oberflächen
- FB: Faserbündel
- FB1,FB2: erster, zweiter Faserbündelzweig
- B1,B2,...: Beleuchtungsfasern
- A1,A2,...: Abbildungsfasern
- BM1,BM2,...: Betriebsmodi
- FF,FP1;FP2: Fokuspunkte
- FS: Faserfrontseite
- Tmax: Maximale Temperatur

## Patentansprüche

1. Refraktometer zur Bestimmung des Brechungsindex eines Prozessmediums (PM), aufweisend:
- eine außerhalb des Prozessmediums (PM) anordenbare Betriebseinheit (1) mit zumindest einer Lichtquelle (2), einer optischen Detektoreinheit (7), und einer Regel-/Auswerteinheit (4);
- eine zumindest teilweise in das Prozessmedium (PM) einbringbare Sondeneinheit (5) mit einem Messprisma (6) mit einem vorgegebenen Brechungsindex, und
- zumindest einen optischen Lichtleiter (3,31) zur Herstellung einer optischen Verbindung zwischen der Betriebseinheit (1) und der Sondeneinheit (5), wobei jeweils der Lichtleiter (3,31) mit seinem ersten Endabschnitt (3a,31a) in die Betriebseinheit (1) und mit seinem zweiten Endabschnitt (3b,31b) jeweils in die Sondeneinheit (5) mündet, und wobei die Betriebseinheit (1), die Sondeneinheit (5) und der/die Lichtleiter (3,31) derart ausgestaltet sind, dass bei der Bestimmung des Brechungsindex des Prozessmediums (PM)
- die zumindest eine Lichtquelle (2) Licht aussendet,
- der/die Lichtleiter (3,31) das von der zumindest einen Lichtquelle (2) ausgesandte Licht an die Sondeneinheit (5) weiterleitet/weiterleiten,
- das Licht an einer durch eine mediumberührende Oberfläche (OF) des Messprismas (6) gebildete Grenzfläche zwischen Prozessmedium (PM) und Messprisma (6) eine Lichtbrechung erfährt, bei der die Sondeneinheit (5) zumindest ein vom Brechungsindex des Prozessmediums (PM) abhängiges optisches Signal (OS) erzeugt,
- der/die Lichtleiter (3,31) das zumindest eine vom Brechungsindex des Prozessmediums (PM) abhängige optische Signal an die Betriebseinheit (1) zurückleitet/zurückleiten,
- die optische Detektoreinheit (7) das zumindest eine optische Signal (OS) erfasst und an die Regel-/Auswerteinheit (4) übermittelt,
- die Regel-/Auswerteinheit (4) anhand des zumindest einen übermittelten optischen Signals (OS) und des vorgegebenen Brechungsindex des Messprismas (6) den Brechungsindex des Prozessmediums (PM) bestimmt,
und **dadurch gekennzeichnet, dass**
- es sich um ein Durchlicht-Refraktometer handelt, dessen Sondeneinheit (5) ein optisches System (8) mit einer in Längsrichtung der Sondeneinheit (5) verlaufenden optischen Achse (z) aufweist, das dazu ausgestaltet ist, aus dem von dem/den Lichterleitern weitergeleiteten Licht ein kolliminiertes Strahlbündel (SB) zu erzeugen, wobei das Messprisma (6) zumindest zwei ebene und gegeneinander geneigte Oberflächen (OF1,OF2) aufweist, die an der mediumberührenden Oberfläche (OF) des Messprismas (6) angeordnet sind, und wobei die beiden gegeneinander geneigten Oberflächen (OF1,OF2) jeweils in Bezug zu einer zur optischen Achse (z) senkrechten Ebene um eine Neigungsachse (x) und in zueinander entgegengesetzte Richtungen geneigt sind, wobei die Neigungsachse (x) senkrecht zur optischen Achse (z) ist,
- wobei die Sondeneinheit (5) ein Umlenkelement (9) aufweist, das in Bezug zu dem optischen System (8) derart entlang der optischen Achse (z) versetzt angeordnet ist, dass
- das Strahlenbündel (SB) in einem ersten Durchgang ein erstes Mal das Messprisma (6) und das Prozessmedium (PM) durchquert, wobei das Strahlenbündel (SB) an der mediumberührenden Oberfläche (OF) ein erstes Mal Lichtbrechung erfährt,
- das Strahlenbündel (SB) am Umlenkelement (9) umgelenkt wird,
- das Strahlenbündel (SB) in einem zweiten Durchgang ein zweites Mal das Messprisma (6) und das Prozessmedium (PM) durchquert, wobei das Strahlenbündel (SB) an der medienberührenden Oberfläche (OF) ein zweites Mal Lichtbrechung erfährt, und
- das optische System (8) anschließend das Strahlenbündel (SB) auf einen der Lichtleiter (3,31) zurückfokussiert und
- der eine der Lichtleiter (3,31) das zumindest eine vom Brechungsindex des Prozessmediums (PM) abhängige optische Signal (OS) an die Betriebseinheit (1) zurückleitet,
wobei einer der oder der Lichtleiter (3,31) als ein Faserbündel (FB) ausgestaltet ist, das zumindest eine mit der zumindest einen Lichtquelle (2,21,22) verbundene Beleuchtungsfaser (B1;B2) und zumindest zwei mit der optischen Detektoreinheit (7) verbundene Abbildungsfasern (A1,A2) umfasst, und wobei die Beleuchtungsfaser/n (B1;B2) dazu ausgestaltet ist/sind, das Licht von der zumindest einen Lichtquelle (2) zu der Sondeneinheit (5) zu leiten und die Abbildungsfasern (A1;A2) dazu ausgestaltet sind, das zumindest eine optische Signal von der Sondeneinheit (5) zu der optischen Detektoreinheit (7) zu leiten, und wobei sich das Faserbündel (FB) in dem in die Betriebseinheit (1) mündenden ersten Endabschnitt (3a,31a) in einen ersten Faserbündelzweig (FB1) mit den/der Beleuchtungsfaser/n (B1,B2) und in einen zweiten Faserbündelzweig (FB2) mit den Abbildungsfasern (A1,A2) verzweigt,
wobei ein dem ersten Endabschnitt (3a) gegenüberliegender zweiter Endabschnitt (3b, 31b) des Lichtleiters (3) mit einem Faserkopf in die Sondeneinheit (5) mündet, und wobei die Beleuchtungsfaser/n (B1,B2) und die Abbildungsfasern (A1,A2) an einer gemeinsamen Faserfrontseite (FS) des Faserkopfs angeordnet sind.

2. Refraktometer nach zumindest einem der vorhergehenden Ansprüche, wobei das Refraktometer genau einen Lichtleiter (3) aufweist, der dazu ausgestaltet ist, das von der zumindest einen Lichtquelle (2) ausgesandte Licht an die Sondeneinheit (5) weiterzuleiten und das zumindest eine vom Brechungsindex des Prozessmediums (PM) abhängige optische Signal (OS) an die Betriebseinheit (1) zurückzuleiten.

3. Refraktometer nach zumindest einem der vorherigen Ansprüche, wobei die mehreren Abbildungsfasern (A1,A2) an dem zweiten Endabschnitt (3b,31b) entlang einer zur optischen Achse (z) im Wesentlichen senkrechten Richtung (y) versetzt angeordnet sind, insb. im Wesentlichen gleich beabstandet versetzt angeordnet.

4. Refraktometer nach zumindest einem der vorherigen Ansprüche, aufweisend mehrere, insb. zumindest zwei, Beleuchtungsfasern (B1,B2), die mit einer gemeinsamen Lichtquelle oder mehreren, insb. zumindest zwei, Lichtquellen (2) verbunden sind, und wobei die Beleuchtungsfasern (B1,B2) jeweils dazu ausgestaltet ist, das Licht der damit verbundenen Lichtquelle (2) von der Betriebseinheit (1) zu der Sondeneinheit (5) zu leiten.

5. Refraktometer nach Anspruch 4, wobei die mehreren Beleuchtungsfasern (B1,B2) an dem in die Sondeneinheit (5) mündenden zweiten Endabschnitt (3b,31b) entlang einer zur optischen Achse (z) und zur Neigungsachse (x) im Wesentlichen senkrechten Richtung (y) versetzt angeordnet sind.

6. Refraktometer nach Anspruch 4 oder 5, wobei das Refraktometer mehrere, insb. zumindest zwei, jeweils von der Regel-/Auswerteeinheit (4) separat ansteuerbare Lichtquellen (2) und jeweils mit den Lichtquellen (2) verbundene Beleuchtungsfasern (B1,B2) aufweist, und wobei insb. die mit den separat ansteuerbaren Lichtquellen (2) verbundenen Beleuchtungsfasern (B1,B2) an dem in die Sondeneinheit (5) mündenden zweiten Endabschnitt (3b,31b) entlang der zur optischen Achse (z) und zur Neigungsachse (x) im Wesentlichen senkrechten Richtung (y) im Wesentlichen gleich beabstandet versetzt angeordnet sind.

7. Refraktometer nach zumindest einem der vorherigen Ansprüche, wobei die Sondeneinheit (5) eine hülsenförmige Ummantelung (10) aufweist, die durch zumindest eine Aussparung (11) unterbrochen ist, mittels derer bei der Bestimmung des Brechungsindex des Prozessmediums (PM) das Prozessmedium (PM) an die mediumberührende Oberfläche (OF) des Messprismas (6) strömbar ist.

8. Refraktometer nach zumindest einem der vorherigen Ansprüche, wobei die Sondeneinheit (5) in einem durch eine maximale Temperatur (Tmax) begrenzten Temperaturbereich einsetzbar ist, und wobei die maximale Temperatur größer als 200°C, insb. größer als 250° C ist.

9. Refraktometer nach zumindest einem der vorherigen Ansprüche, aufweisend zumindest einen Temperatursensor (12) der dazu ausgestaltet ist, die Temperatur des Prozessmediums (PM) zu ermitteln, und wobei die Regel-/Auswerteeinheit (4) dazu ausgestaltet ist, eine aus dem Brechungsindex ableitbare Prozessgröße des Prozessmediums (PM) zu bestimmen und die von dem/den Temperatursensor/en (12) ermittelte Temperatur bei der Bestimmung der aus dem Brechungsindex abgeleiteten Prozessgröße des Prozessmediums (PM) zu berücksichtigen.

10. Refraktometer nach zumindest einem der vorherigen Ansprüche, wobei der Durchmesser der Sondeneinheit (5), insb. der hülsenförmigen Ummantelung (10), kleiner als 45 mm, insb. kleiner 20 mm, vorzugsweise kleiner als 15 mm ist.

11. Refraktometer nach zumindest einem der vorherigen Ansprüche, wobei das Refraktometer zumindest teilweise, insb. dessen Sondeneinheit (5), in eine in das Prozessmedium (PM) verfahrbare Schleusenarmatur (13) einsetzbar ist.

12. Verfahren zur Bestimmung des Brechungsindex eines Prozessmediums (PM), mit einem Refraktometer nach zumindest einem der vorherigen Ansprüche, in dem
- von der zumindest einen Lichtquelle (2) Licht ausgesandt wird,
- das von der zumindest einen Lichtquelle (2) ausgesandte Licht von dem/den Lichtleiter/n (3,31) an die Sondeneinheit (5) weitergeleitet wird,
- das Licht an einer durch eine mediumberührende Oberfläche (OF) des Messprismas (6) gebildete Grenzfläche zwischen Prozessmedium (PM) und Messprisma (6) gebrochen wird, bei der von der Sondeneinheit (5) zumindest ein vom Brechungsindex des Prozessmediums (PM) abhängiges optisches Signal (OS) erzeugt wird,
- das zumindest eine vom Brechungsindex des Prozessmediums (PM) abhängige optische Signal (OS) von dem/den Lichtleiter/n (3,31) an die Betriebseinheit (1) zurückgeleitet wird,
- das zumindest eine optische Signal (OS) von der optischen Detektoreinheit (7) an die Regel-/Auswerteinheit (4) übermittelt wird, und
- von der Regel-/Auswerteinheit (4) der Brechungsindex des Prozessmediums (PM) anhand des zumindest einen übermittelten optischen Signals (OS) und des vorgegebenen Brechungsindex des Messprismas (6) bestimmt wird.

13. Verfahren nach Anspruch 12, wobei das Refraktometer mehrere, insbesondere zumindest zwei, jeweils von der Regel-/Auswerteeinheit (4) separat ansteuerbare Lichtquellen (2) aufweist, wobei das Refraktometer zeitlich aufeinanderfolgend in verschiedenen Betriebsmodi (BM1,BM2,...) betrieben wird, in denen
- jeweils genau eine der mehreren Lichtquellen (2) des Refraktometers verwendet wird und das zu dem jeweiligen Betriebsmodi (BM1,BM2) gehörige optische Signal (OS) gespeichert wird, wobei von der Regel-/Auswerteinheit (4) der Brechungsindex des Prozessmediums (PM) anhand der Gesamtheit der gespeicherten optischen Signale (OS) aus allen Betriebsmodi (BM1,BM2) und anhand des vorgegebenen Brechungsindex des Messprismas (6) bestimmt wird.

## Claims

1. A refractometer for determining the refractive index of a process medium (PM), having:
- An operating unit (1), which can be arranged outside the process medium (PM), with at least one light source (2), an optical detector unit (7), and a control/evaluation unit (4);
- a probe unit (5) with a measuring prism (6) having a predetermined refractive index, which can be at least partially introduced into the process medium (PM), and
- at least one optical light guide (3,31) for establishing an optical connection between the operating unit (1) and the probe unit (5), wherein the first end section (3a,31a) of each of the light guides (3,31) leads into the operating unit (1) and the second end section (3b,31b) leads in each case into the probe unit (5), and wherein the operating unit (1), the probe unit (5), and the light guide(s) (3,31) are configured in such a way that, when determining the refractive index of the process medium (PM),
- the at least one light source (2) emits light,
- the light guide(s) (3,31) transmit(s) the light emitted by the at least one light source (2) to the probe unit (5),
- the light is refracted at a boundary surface formed by a medium-contacting surface (OF) of the measuring prism (6) between the process medium (PM) and the measuring prism (6), wherein the probe unit (5) generates at least one optical signal (OS), which is dependent on the refractive index of the process medium (PM),
- - the light guide(s) (3,31) return(s) the at least one optical signal, which is dependent on the refractive index of the process medium (PM), to the operating unit (1),
- the optical detector unit (7) detects the at least one optical signal (OS) and transmits it to the control/evaluation unit (4),
- the control/evaluation unit (4) determines the refractive index of the process medium (PM) on the basis of the at least one transmitted optical signal (OS) and the predetermined refractive index of the measuring prism (6),
and **characterized in that**
- it is a transmitted light refractometer, the probe unit (5) of which has an optical system (8) with an optical axis (z) running in the longitudinal direction of the probe unit (5), which is configured to generate a collimated beam bundle (SB) from the light transmitted by the light guide(s), wherein the measuring prism (6) has at least two flat surfaces (OF1,OF2) inclined relative to each other, which are arranged on the medium-contacting surface (OF) of the measuring prism (6), and wherein the two surfaces (OF1,OF2) inclined relative to each other are each inclined about an inclination axis (x) on a plane perpendicular to the optical axis (z) and in mutually opposite directions, wherein the inclination axis (x) is perpendicular to the optical axis (z),
- wherein the probe unit (5) has a deflection element (9) which is arranged staggered along the optical axis (z) with respect to the optical system (8) in such a way that
- the beam bundle (SB) passes through the measuring prism (6) and the process medium (PM) a first time in a first pass, wherein the beam bundle (SB) is refracted for the first time at the medium-contacting surface (OF),
- the beam bundle (SB) is deflected at the deflection element (9),
- the beam bundle (SB) passes through the measuring prism (6) and the process medium (PM) a second time in a second pass, wherein the beam bundle (SB) is refracted for a second time at the medium-contacting surface (OF), and
- the optical system (8) then refocuses the beam bundle (SB) onto one of the light guides (3,31) and
- the one of the light guides (3,31) returns the at least one optical signal (OS), which is dependent on the refractive index of the process medium (PM), to the operating unit (1), wherein one of the light guides or the light guide (3,31) is/are configured as a fiber bundle (FB), which comprises at least one illumination fiber (B1;B2) connected to the at least one light source (2,21,22) and at least two imaging fibers (A1,A2) connected to the optical detector unit (7), and wherein the illumination fiber(s) (B1;B2) is/are configured to guide the light from the at least one light source (2) to the probe unit (5) and the imaging fibers (A1;A2) are configured to guide the at least one optical signal from the probe unit (5) to the optical detector unit (7), and wherein the illumination fiber(s) (B1,B2) of the fiber bundle (FB) in the first end section (3a,31a) leading into the operating unit (1) branch into a first fiber bundle branch (FB1) and the imaging fibers (A1,A2) into a second fiber bundle branch (FB2), wherein a fiber head of a second end section (3b,31b) of the light guide (3), which is opposite the first end section (3a), leads into the probe unit (5), and wherein the illumination fiber(s) (B1,B2) and the imaging fibers (A1,A2) are arranged on a joint fiber front side (FS) on the fiber head.

2. The refractometer as claimed in at least one of the preceding claims, wherein the refractometer has exactly one light guide (3) which is configured to transmit the light emitted by the at least one light source (2) to the probe unit (5) and to return the at least one optical signal (OS), which is dependent on the refractive index of the process medium (PM), to the operating unit (1).

3. The refractometer as claimed in at least one of the preceding claims, wherein the multiple imaging fibers (A1,A2) are arranged staggered at the second end section (3b,31b) along a direction (y) which is essentially perpendicular to the optical axis (z), in particular arranged staggered at distances which are essentially equal.

4. The refractometer as claimed in at least one of the preceding claims, having multiple, in particular at least two, illumination fibers (B1,B2), which are connected to a shared light source or multiple, in particular at least two, light sources (2), and wherein the illumination fibers (B1,B2) are each configured to guide the light from the light source (2) connected thereto from the operating unit (1) to the probe unit (5).

5. The refractometer as claimed in claim 4,
wherein the multiple illumination fibers (B1,B2) at the second end section (3b,31b) leading into the probe unit (5) are arranged staggered along a direction (y) essentially perpendicular to the optical axis (z) and to the inclination axis (x).

6. The refractometer as claimed in claim 4 or 5,
wherein the refractometer has multiple, in particular at least two, light sources (2), each of which can be controlled separately by the control/evaluation unit (4), and illumination fibers (B1,B2) connected in each case to the light sources (2), and wherein in particular the illumination fibers (B1,B2) connected to the separately controllable light sources (2) at the second end section (3b,31b) leading into the probe unit (5) are arranged staggered at distances which are essentially equal along the direction (y) essentially perpendicular to the optical axis (z) and to the inclination axis (x).

7. The refractometer as claimed in at least one of the preceding claims, wherein the probe unit (5) has a sleeve-shaped sheathing (10) which is interrupted by at least one recess (11) by means of which the process medium (PM) can flow to the medium-contacting surface (OF) of the measuring prism (6) when determining the refractive index of the process medium (PM).

8. The refractometer as claimed in at least one of the preceding claims, wherein the probe unit (5) can be used in a temperature range limited by a maximum temperature (Tmax), and wherein the maximum temperature is higher than 200 °C, in particular higher than 250 °C.

9. The refractometer as claimed in at least one of the preceding claims, having at least one temperature sensor (12) which is configured to determine the temperature of the process medium (PM), and wherein the control/evaluation unit (4) is configured to determine a process variable of the process medium (PM) which can be derived from the refractive index and to take into account the temperature determined by the temperature sensor(s) (12) when determining the process variable of the process medium (PM) derived from the refractive index.

10. The refractometer as claimed in at least one of the preceding claims, wherein the diameter of the probe unit (5), in particular of the sleeve-shaped sheathing (10), is smaller than 45 mm, in particular smaller than 20 mm, preferably smaller than 15 mm.

11. The refractometer as claimed in at least one of the preceding claims, wherein the refractometer, in particular its probe unit (5), can be inserted at least partially into a gate fitting (13) which can be moved into the process medium (PM).

12. A method for determining the refractive index of a process medium (PM), with a refractometer as claimed in at least one of the preceding claims, in which
- light is emitted by the at least one light source (2),
- the light emitted by the at least one light source (2) is transmitted by the light guide(s) (3,31) to the probe unit (5),
- the light is refracted at a boundary surface formed by a medium-contacting surface (OF) of the measuring prism (6) between the process medium (PM) and measuring prism (6), wherein at least one optical signal (OS), which is dependent on the refractive index of the process medium (PM), is generated by the probe unit (5),
- the at least one optical signal (OS), which is dependent on the refractive index of the process medium (PM), is fed back by the light guide(s) (3,31) to the operating unit (1),
- the at least one optical signal (OS) is transmitted by the optical detector unit (7) to the control/evaluation unit (4), and
- the refractive index of the process medium (PM) is determined by the control/evaluation unit (4) on the basis of this at least one transmitted optical signal (OS) and the predetermined refractive index of the measuring prism (6).

13. The method as claimed in claim 12,
wherein the refractometer has multiple, in particular at least two, light sources (2), each of which can be controlled separately by the control/evaluation unit (4), wherein the refractometer is operated in different operating modes (BM1,BM2,...) in succession, in which
- exactly one of the multiple light sources (2) of the refractometer is used in each case, and the optical signal (OS) associated with the respective operating mode (BM1,BM2) is stored, wherein the refractive index of the process medium (PM) is determined by the control/evaluation unit (4) on the basis of all of the stored optical signals (OS) from all operating modes (BM1,BM2) and on the basis of the predetermined refractive index of the measuring prism (6).

## Revendications

1. Réfractomètre destiné à la détermination de l'indice de réfraction d'un produit de process (PM), lequel réfractomètre comprend:
- une unité de fonctionnement (1 ) pouvant être disposée à l'extérieur du produit de process de traitement (PM) et comprenant au moins une source lumineuse (2), une unité de détection optique (7) et une unité de régulation/d'évaluation (4) ;
- une unité de sonde (5) pouvant être placée au moins partiellement dans le produit de process (PM), avec un prisme de mesure (6) ayant un indice de réfraction prédéfini, et
- au moins une fibre optique (3, 31) destinée à établir une liaison optique entre l'unité de fonctionnement (1) et l'unité de sonde (5), la fibre optique (3, 31) débouchant respectivement par son premier tronçon d'extrémité (3a, 31a) dans l'unité de fonctionnement (1) et par son deuxième tronçon d'extrémité (3b, 31b) dans l'unité de sonde (5), et l'unité de fonctionnement (1), l'unité de sonde (5) et la/les fibre(s) optique(s) (3, 31) étant conçus de telle sorte que, lors de la détermination de l'indice de réfraction du produit de process (PM)
- l'au moins une source lumineuse (2) émet de la lumière,
- la/les fibre(s) optique(s) (3, 31) transmet(tent) la lumière émise par l'au moins une source lumineuse (2) à l'unité de sonde (5),
- la lumière subit une réfraction sur une interface formée par une surface (OF) du prisme de mesure (6) en contact avec le produit, entre le produit de process (PM) et le prisme de mesure (6), interface au niveau de laquelle l'unité de sonde (5) génère au moins un signal optique (OS) dépendant de l'indice de réfraction du produit de process (PM),
- la/les fibre(s) optique(s) (3, 31) renvoie(nt) à l'unité de fonctionnement (1) l'au moins un signal optique dépendant de l'indice de réfraction du produit de process (PM),
- l'unité de détection optique (7) détecte l'au moins un signal optique (OS) et le transmet à l'unité de régulation/d'évaluation (4),
- l'unité de régulation/d'évaluation (4) détermine l'indice de réfraction du produit de process (PM) à l'aide de l'au moins un signal optique (OS) transmis et de l'indice de réfraction prédéfini du prisme de mesure (6),
et **caractérisé en ce que**
- il s'agit d'un réfractomètre à lumière transmise, dont l'unité de sonde (5) présente un système optique (8) avec un axe optique (z) s'étendant dans la direction longitudinale de l'unité de sonde (5), lequel système est conçu pour produire un faisceau de rayons collimaté (SB) à partir de la lumière transmise par la ou les fibres optiques, le prisme de mesure (6) présentant au moins deux surfaces (OF1, OF2) planes et inclinées l'une par rapport à l'autre, lesquelles surfaces sont disposées sur la surface (OF) du prisme de mesure (6) en contact avec le produit, et les deux surfaces (OF1, OF2) inclinées l'une par rapport à l'autre étant respectivement inclinées par rapport à un plan perpendiculaire à l'axe optique (z) autour d'un axe d'inclinaison (x) et dans des directions mutuellement opposées, l'axe d'inclinaison (x) étant perpendiculaire à l'axe optique (z),
- l'unité de sonde (5) comprenant un élément de déviation (9), lequel est décalé par rapport au système optique (8) le long de l'axe optique (z) de telle sorte que
- le faisceau de rayons (SB) traverse une première fois le prisme de mesure (6) et le produit de process (PM) au cours d'un premier passage, le faisceau de rayons (SB) subissant une première fois une réfraction de la lumière sur la surface (OF) en contact avec le produit,
- le faisceau de rayons (SB) est dévié au niveau de l'élément de déviation (9),
- le faisceau de rayons (SB) traverse une deuxième fois le prisme de mesure (6) et le produit de process (PM) au cours d'un deuxième passage, le faisceau de rayons (SB) subissant une deuxième réfraction de la lumière sur la surface (OF) en contact avec le produit, et
- le système optique (8) refocalise ensuite le faisceau de rayons (SB) sur l'une des fibres optiques (3, 31) et
- l'une des fibres optiques (3, 31) renvoie à l'unité de fonctionnement (1) l'au moins un signal optique (OS) dépendant de l'indice de réfraction du produit de process (PM), l'une des fibres optiques (3, 31) étant conçue comme un faisceau de fibres (FB) comprenant au moins une fibre d'éclairage (B1, B2) reliée à l'au moins une source lumineuse (2, 21, 22) et au moins deux fibres de focalisation (A1, A2) reliées à l'unité de détection optique (7), et la ou les fibres d'éclairage (B1 ; B2) étant conçue(s) pour faire parvenir la lumière de l'au moins une source lumineuse (2) à l'unité de sonde (5) et les fibres de focalisation (A1, A2) étant conçues pour faire parvenir l'au moins un signal optique de l'unité de sonde (5) à l'unité de détecteur optique (7), et le faisceau de fibres (FB) se ramifiant dans la première section d'extrémité (3a, 31a) débouchant dans l'unité de fonctionnement (1) en une première branche de faisceau de fibres (FB1) avec la/les fibre(s) d'éclairage (B1, B2) et en une deuxième branche de faisceau de fibres (FB2) avec les fibres de focalisation (A1, A2), une deuxième section d'extrémité (3b, 31b) de la fibre optique (3) opposée à la première section d'extrémité (3a) débouchant avec une tête de fibre dans l'unité de sonde (5), et la ou les fibres d'éclairage (B1, B2) et les fibres de focalisation (A1, A2) étant disposées sur un côté frontal de fibre (FS) commun de la tête de fibre.

2. Réfractomètre selon la revendication précédente, pour lequel le réfractomètre présente exactement une fibre optique (3), laquelle est conçue pour transmettre la lumière émise par l'au moins une source lumineuse (2) à l'unité de sonde (5) et pour renvoyer à l'unité de fonctionnement (1) l'au moins un signal optique (OS) dépendant de l'indice de réfraction du produit de process (PM).

3. Réfractomètre selon au moins l'une des revendications précédentes, pour lequel la pluralité de fibres de focalisation (A1, A2) sont disposées de manière décalée, notamment disposées de manière décalée et sensiblement équidistante, sur le deuxième tronçon d'extrémité (3b, 31b) le long d'une direction (y) sensiblement perpendiculaire à l'axe optique (z).

4. Réfractomètre selon au moins l'une des revendications précédentes, lequel réfractomètre comprend plusieurs, notamment au moins deux, fibres d'éclairage (B1, B2), lesquelles sont reliées à une source lumineuse commune ou à plusieurs, notamment au moins deux, sources lumineuses (2), et
pour lequel les fibres d'éclairage (B1, B2) sont chacune conçues pour guider, de l'unité de fonctionnement (1) vers l'unité de sonde (5), la lumière de la source lumineuse (2), laquelle source est reliée aux fibres.

5. Réfractomètre selon la revendication 4,
pour lequel la pluralité de fibres d'éclairage (B1, B2) sont disposées de manière décalée sur le deuxième tronçon d'extrémité (3b, 31b) débouchant dans l'unité de sonde (5), selon une direction (y) sensiblement perpendiculaire à l'axe optique (z) et à l'axe d'inclinaison (x).

6. Réfractomètre selon la revendication 4 ou 5,
lequel réfractomètre comporte plusieurs, notamment au moins deux, sources lumineuses (2) pouvant être commandées séparément chacune par l'unité de régulation/d'évaluation (4) et des fibres d'éclairage (B1, B2) reliées chacune aux sources lumineuses (2), et
pour lequel notamment les fibres d'éclairage (B1, B2) reliées aux sources lumineuses pouvant être commandées séparément sont disposées - de manière décalée sensiblement à la même distance - sur le deuxième tronçon d'extrémité (3b, 31b) débouchant dans l'unité de sonde (5), le long de la direction (y) sensiblement perpendiculaire à l'axe optique (z) et à l'axe d'inclinaison (x).

7. Réfractomètre selon au moins l'une des revendications précédentes, pour lequel l'unité de sonde (5) présente une enveloppe (10) en forme de manchon, laquelle enveloppe est interrompue par au moins un évidement (11) au moyen duquel, lors de la détermination de l'indice de réfraction du produit de process (PM), le produit de process (PM) peut s'écouler sur la surface (OF) du prisme de mesure (6), laquelle surface est en contact avec le produit.

8. Réfractomètre selon au moins l'une des revendications précédentes,
pour lequel l'unité de sonde (5) peut être utilisée dans une gamme de température limitée par une température maximale (Tmax), et
pour lequel la température maximale est supérieure à 200 °C, notamment supérieure à 250 °C.

9. Réfractomètre selon au moins l'une des revendications précédentes,
lequel présente au moins un capteur de température (12) conçu pour déterminer la température du produit de process (PM), et
pour lequel l'unité de régulation/d'évaluation (4) est conçue pour déterminer une grandeur de process du produit de process (PM) pouvant être déduite de l'indice de réfraction et pour prendre en compte la température déterminée par le ou les capteurs de température (12) lors de la détermination de la grandeur de process du produit de process (PM) déduite de l'indice de réfraction.

10. Réfractomètre selon au moins l'une des revendications précédentes, pour lequel le diamètre de l'unité de sonde (5), notamment de l'enveloppe (10) en forme de manchon, est inférieur à 45 mm, notamment inférieur à 20 mm, de préférence inférieur à 15 mm.

11. Réfractomètre selon au moins l'une des revendications précédentes, pour lequel le réfractomètre peut être inséré au moins partiellement, notamment son unité de sonde (5), dans un support (13) pouvant être déplacé dans le produit de process (PM).

12. Procédé destiné à la détermination de l'indice de réfraction d'un produit de process (PM), avec un réfractomètre selon au moins l'une des revendications précédentes, dans lequel
- de la lumière est émise par l'au moins une source lumineuse (2),
- la lumière émise par l'au moins une source lumineuse (2) est transmise par la ou les fibres optiques (3, 31) à l'unité de sonde (5),
- la lumière est réfractée au niveau d'une interface - laquelle est formée par une surface (OF) du prisme de mesure (6), laquelle surface est en contact avec le produit - entre le produit de process (PM) et le prisme de mesure (6), interface au niveau de laquelle au moins un signal optique (OS) dépendant de l'indice de réfraction du produit de process (PM) est généré par l'unité de sonde (5),
- l'au moins un signal optique (OS) dépendant de l'indice de réfraction du produit de process (PM) est renvoyé par le ou les fibres optiques (3, 31) à l'unité de fonctionnement (1), l'au moins un signal optique (OS) est transmis par l'unité de détection optique (7) à l'unité de régulation/d'évaluation (4), et
- l'indice de réfraction du produit de process (PM) est déterminé par l'unité de régulation/d'évaluation (4) à l'aide de l'au moins un signal optique (OS) transmis et de l'indice de réfraction prédéfini du prisme de mesure (6).

13. Procédé selon la revendication 12,
pour lequel le réfractomètre comporte plusieurs, notamment au moins deux, sources lumineuses (2), lesquelles peuvent être commandées séparément par l'unité de régulation/d'évaluation (4), le réfractomètre étant utilisé successivement dans le temps dans différents modes de fonctionnement (BM1, BM2, ...), modes dans lesquels
- exactement une des plusieurs sources lumineuses (2) Il du réfractomètre est à chaque fois utilisée et
- le signal optique (OS) correspondant au mode de fonctionnement respectif (BM1, BM2) est mémorisé,
l'unité de régulation/d'évaluation (4) déterminant l'indice de réfraction du produit de process (PM) à l'aide de l'ensemble des signaux optiques (OS) mémorisés provenant de tous les modes de fonctionnement (BM1, BM2) et à l'aide de l'indice de réfraction prédéfini du prisme de mesure (6).
